(19) Europäisches Patentamt
European Patent Office
Office européen des brevets

(11) EP 4 778 837 A1

(12) EUROPEAN PATENT APPLICATION
published in accordance with Art. 153(4) EPC

(43) Date of publication:
**22.07.2026 Bulletin 2026/30**

(21) Application number: **23956037.8**

(22) Date of filing: **17.10.2023**

(51) International Patent Classification (IPC):
***B64G 1/26*** *(2006.01)*

(52) Cooperative Patent Classification (CPC):
**B64G 1/26**

(86) International application number:
**PCT/JP2023/037581**

(87) International publication number:
**WO 2025/083785 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sky Perfect JSAT Corporation**
**Tokyo 107-0052 (JP)**

(72) Inventors:
- **ITAYA, Yuki**
  **Tokyo 107-0052 (JP)**
- **FUKUSHIMA, Tadanori**
  **Tokyo 107-0052 (JP)**

(74) Representative: **Isarpatent**
**Patent- und Rechtsanwälte Part G mbB**
**Friedrichstrasse 31**
**80801 München (DE)**

# (54) SPACECRAFT AND CONTROL METHOD FOR SAME

(57) A control method for transitioning an orbit of a spacecraft to a target orbit of which an altitude and an inclination angle are the same as those of a current orbit, and an ascending node is different therefrom, includes a deciding step of deciding an acceleration vector, a first acceleration step of accelerating in a direction of the acceleration vector that is decided, a standby step of standing by until the orbit becomes the target orbit, and a second acceleration step of accelerating in an opposite direction from the acceleration vector that is decided, in which, with respect to the acceleration vector, a relation of $\Delta Va = \pm(7/\tan(i_0)) \times \Delta Vi$ is satisfied, in which $\Delta Va$ is a travelling direction component, $\Delta Vi$ is an out-of-plane direction component, and $i_0$ is an inclination angle of the current orbit.

FIG. 1

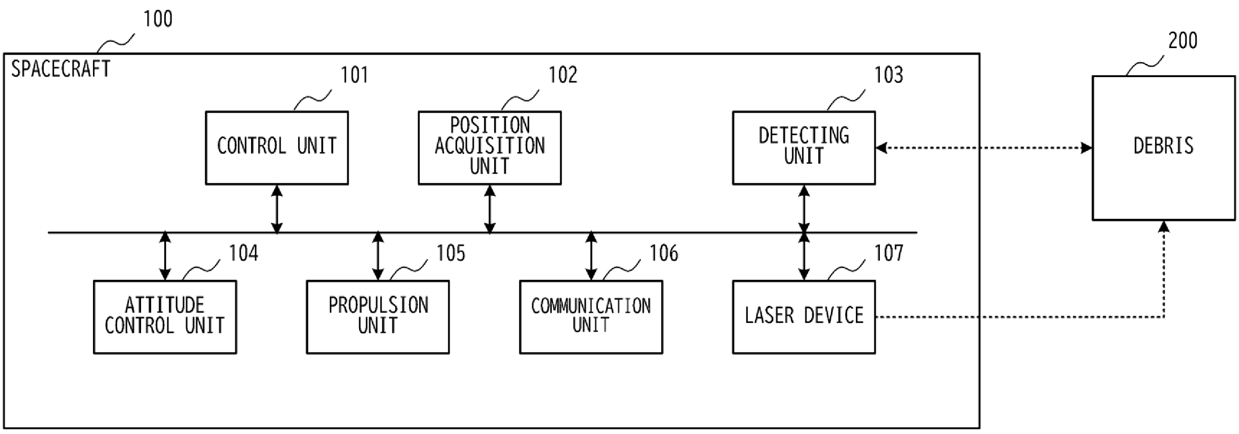


EP 4 778 837 A1

## Description

[Technical Field]

The present invention relates to a spacecraft, and a control method thereof.

[Background Art]

In recent years, an increase in debris in outer space (space junk) is becoming a problem. The debris includes an artificial satellite that has become unused, an artificial satellite that malfunctioned a part of artificial satellite released by a collision or the like, and so forth. Debris has a risk of causing a collision with an artificial satellite in operation, and even if a piece of debris of about several centimeters collide with an artificial satellite, catastrophic damage occurs to the artificial satellite. There also is concern regarding a problem in which debris increases and collides with artificial satellites, leading to an explosive increase in debris (the Kessler Syndrome).

Under these circumstances, a proposal has been made to perform a multi-rendezvous with a single artificial satellite to eliminate multiple pieces of debris. Multi-rendezvous enables the number of service satellites to be reduced, leading to reduced manufacturing costs and launch costs of artificial satellites, and reduction in overall service costs can be anticipated. Note that debris frequently mentioned as objects for elimination includes a spent satellite in the low earth orbit (LEO) constellation and the debris cloud in sun synchronous orbit (SSO). These objects are numerous and densely concentrated in various orbits, and are therefore considered extremely dangerous.

PTL 1 proposes using orbital plane change (J2 perturbation) arising from the oblateness of the Earth to change orbit. Specifically, PTL 1 discloses placing a piggyback satellite into the orbit of a main satellite, and thereafter changing its orbital altitude thereof using J2 perturbation so as to be placed in the target orbit that is intended.

Control of orbital plane using J2 perturbation is not limited to change in orbital altitude, and can be performed using change in inclination angle of orbit, or change in both orbital altitude and inclination angle, as described in NPL 1. Accordingly, the technique of changing orbital altitude that is disclosed in PTL 1 is not necessarily a preferred control method.

[Citation List]

[Patent Literature]

[PTL 1] Japanese Patent Application Publication No. 2014-141108

[Non Patent Literature]

[NPL 1] E. Perot, M.-Ch. Desjean, Lorenzo Bitetti, & Th. Martin. (2013). Active Debris Removal mission design in Low Earth Orbit. Progress in Propulsion Physics.

[NPL 2] Petropoulos, A., Grebow, D., Jones, D., Lantoine, G., Nicholas, A., Roa, J., Senent, J., Stuart, J., Arora, N., Pavlak, T., Lam, T., McElrath, T., Roncoli, R., Garza, D., Bradley, N., Landau, D., Tarzi, Z., Laipert, F., Bonfiglio, E., ... Sims, J. (2018). Gtoc9: Results From The Jet Propulsion Laboratory (Team Jpl).

[NPL 3] Vallado, D. A. (2013). Fundamentals of astrodynamics and applications / David A. Vallado; with technical contributions by Wayne D. McClain. Published by Microcosm Press.

[NPL 4] Shiyu Chen, & Hexi Baoyin. (2022). Analytical Estimation of the Velocity Increment in J2-Perturbed Impulsive Transfers. Journal of Guidance, Control, and Dynamics, 45(2), 310-319.

[NPL 5] Hong-Xin Shen, & Lorenzo Casalino. (2021). Simple $\Delta V$ Approximation for Optimization of Debris-to-Debris Transfers. Journal of Spacecraft and Rockets, 58(2), 575-580.

[Summary of Invention]

[Technical Problem]

An object of the present invention is to provide orbit control technology whereby orbital transition completion time per consumed fuel is reduced.

[Solution to Problem]

The first aspect of the invention is a control method for transitioning an orbit of a spacecraft to a target orbit of which an altitude and an inclination angle are the same as those of a current orbit, and an ascending node is different therefrom, the control method comprising: a deciding step of deciding an acceleration direction; a first acceleration step of accelerating in the decided acceleration direction; a standby step of standing by until the orbit becomes the target orbit; and a second acceleration step of accelerating in an opposite direction from the decided acceleration direction, wherein a relation of $\Delta Va = \pm(7/\tan(i_0)) \times \Delta Vi$ is satisfied, in which $\Delta Va$ is a travelling direction component of the acceleration direction, $\Delta Vi$ is an out-of-plane direction component of the acceleration direction, and $i_0$ is the inclination angle of the current orbit.

The second aspect of the invention is a control method for transitioning an orbit of a spacecraft to a target orbit of which an altitude and an inclination angle are the same as those of a current orbit, and an ascending node is different therefrom, the control method comprising: a deciding step of deciding whether to make the acceleration direction parallel to a travelling direction or an out-of-plane direction; a first acceleration step of accelerating in the decided acceleration direction; a standby step of standing by until the orbit becomes the target orbit; and a second acceleration step of accelerating in an opposite direction from the decided acceleration direction, wherein the acceleration direction is set to be parallel to the out-of-plane direction if an inclination angle $i_0$ satisfies $81.87° < i_0 < 98.13°$, the acceleration direction is set to be parallel to the travelling direction otherwise.

The third aspect of the invention is a spacecraft, comprising: a control unit; an attitude control unit; and a propulsion unit, wherein the control unit performs control to decide an acceleration direction such that a relation of $\Delta Va = \pm(7/\tan(i0)) \times \Delta Vi$ is satisfied, in which $\Delta Va$ is a travelling direction component of an acceleration direction, $\Delta Vi$ is an out-of-plane direction component of the acceleration direction, and i0 is an inclination angle of a current orbit, accelerate in the decided acceleration direction, using the attitude control unit and the propulsion unit, stand by until the orbit becomes a target orbit, and accelerate in an opposite direction from the decided acceleration direction, using the attitude control unit and the propulsion unit.

The fourth aspect of the invention is a spacecraft, comprising: a control unit; an attitude control unit; and a propulsion unit, wherein the control unit performs control to set an acceleration direction to be an out-of-plane direction if an inclination angle i0 of a current orbit satisfies $81.87° < i0 < 98.13°$, and set the acceleration direction to be a travelling direction otherwise, accelerate in the decided acceleration direction, using the attitude control unit and the propulsion unit, stand by until the orbit becomes a target orbit, and accelerate in an opposite direction from the decided acceleration direction, using the attitude control unit and the propulsion unit.

[Advantageous Effects of Invention]

According to the present invention, orbital transition is enabled in which orbital transition completion time per consumed fuel is reduced.

[Brief Description of Drawings]

[Fig. 1]
Fig. 1 is a configurational diagram of a spacecraft according to an embodiment.
[Fig. 2]
Fig. 2 is a diagram describing orbit control.
[Fig. 3]
Fig. 3 is a diagram describing a coordinates system of the spacecraft.
[Fig. 4]
Fig. 4 is a flowchart showing an orbit control method according to a first embodiment.
[Fig. 5]
Fig. 5 is a flowchart showing an orbit control method according to a second embodiment.
[Fig. 6]
Fig. 6 is diagrams indicating increase in ascending node precession rate, in which (A) is a case of changing orbital altitude, and (B) is a case of changing orbital inclination.
[Fig. 7]
Fig. 7 is a diagram showing an inclination angle conversion component and a semi-major axis conversion component of an acceleration conversion vector.
[Fig. 8]

Fig. 8 is a diagram showing increase in ascending node precession rate in accordance with a ratio (m) of semi-major axis change and inclination angle change.
[Fig. 9]
Fig. 9 is diagrams showing a relation between the orbital inclination and the ratio (m) of the semi-major axis change and the inclination angle change.
[Fig. 10] Fig. 10 is a diagram showing increase in the ascending node precession rate in a case of changing the semi-major axis change and the inclination angle change by the ratio (m) indicated by the present technique.

[Description of Embodiments]

[1. Overview]

A spacecraft according to the present embodiment is an artificial satellite that matches its own orbit with an orbit of an object in outer space, and thereafter emits a laser beam to the object so as to eliminate the object. The spacecraft according to the present embodiment implements multirendezvousing in order to approach objects with a plurality of different orbits and eliminate the objects.
Objects are artificial objects including debris (space junk, space debris) and objects other than artificial objects (e.g., meteorites or the like) that are present in outer space. Debris includes an artificial satellite that has become uncontrollable, an artificial satellite that has become unneeded upon termination of operation, and a part of artificial satellite released by a collision etc. Description will be made in the present embodiment regarding an example in which end-of-life satellites in the low earth orbit (LEO) constellation or debris in sun synchronous orbit (SSO) is treated as the object.
In the present specification a satellite that eliminates debris will be referred also to as a service satellite, and a satellite that falls under being debris and thus is the subject of elimination will be referred also as a target satellite.
Note that while an example in which an artificial satellite is used as the spacecraft will be described in the present embodiment, this is not limited to unmanned spacecrafts, and a manned spacecraft may be used as the spacecraft. Also, equipment (a sub-satellite) that is loaded in the artificial satellite (a carrier) or the like may be used as the spacecraft.

<1-1. Issues in Implementing Multirendezvousing>

In multirendezvousing dealing with end-of-life satellites in the LEO constellation and debris in the SSO, matching of ascending nodes is important. A feature of end-of-life satellites in the LEO constellation and debris in the SSO is that while orbital altitudes and orbital inclinations have similar values, the right ascension of the ascending nodes is distributed over 0 to 360 degrees, and the orbital planes are uncoordinated. Accordingly, in a case of performing multirendezvousing regarding such objects, there is a need to narrow this difference in ascending nodes when ending elimination service of one object and heading toward the next object.
Attempting to change the right ascension of ascending node simply by impulsive thrust would necessitate an enormous velocity change $\Delta V$ (e.g., thrust). For example, in a case where a satellite is on a circular orbit at an orbital altitude of 1000 km and an orbital inclination of 60 degrees, changing the right ascension of the ascending node by 30 degrees would necessitate an unrealistic velocity increment of approximately 3300 [m/s].
Accordingly, there is a need to realize orbit change with less thrust (i.e., fuel consumption), in order to increase feasibility of multirendezvousing.

<1-2. Utilization of J2 Perturbation in Multirendezvousing>

There is interest in utilizing orbital perturbation as a technique to change the right ascension of the ascending node while conserving $\Delta V$. The right ascension of the ascending node is constantly changing due to effects of orbital perturbation (excluding extraordinary conditions). Actively utilizing this change enables the right ascension of the ascending node to be changed.
In the LEO region, J2 perturbation due to the oblateness of the Earth is a dominant perturbation force with respect to this change of the ascending node, and ascending node precession rate by the J2 perturbation is expressed as in the following Equation (see NPL 3). [Math 1]

$$\dot{\Omega} = -\frac{3}{2} J_2 \left\{\frac{R_E}{a(1-e^2)}\right\}^2 \sqrt{\frac{\mu_E}{a^3}} \cos i \qquad (1)$$

Here, $\Omega$ with a dot ($d\Omega/dt$) represents the rate of the right ascension of the ascending node, and the unit thereof is

[rad/sec]. $J_2 = 1.08263 \times 10^{-3}$ represents a perturbation constant, $R_E = 6378.137$ [km] represents the radius of the Earth, $\mu_E = 3.986 \times 10^{14}$ [$m^3/s^2$] represents the gravitational constant of the Earth, a represents an orbital semi-major axis [m], e represents eccentricity, and i represents an orbital inclination [rad]. Hereinafter, time derivative is represented by dots in mathematical expressions, and is represented by d/dt in the text.

When a service satellite and a target satellite have different rates of change of ascension nodes, the difference therebetween causes the difference in ascension nodes of the two to gradually become smaller (or become greater). Accordingly, ΔV can be conserved by waiting until matching of the right ascension of the ascending node by perturbation force is complete.

On the other hand, when considering multi-rendezvousing regarding the LEO constellation and the SSO debris, many objects on these orbits have similar orbital semi-major axes a and orbital inclinations i. Assuming a circular orbit (e = 0) with respect to the above Equation (1), it can be seen that objects having the same a and i will have the same rate of change of the right ascension of the ascending node. Accordingly, in a case of performing multirendezvousing regarding the LEO constellation and the SSO debris, simply waiting to head to the next orbit will never narrow the difference in right ascension of the ascending node.

Accordingly, a technique of changing the orbital semi-major axis a or the orbital inclination i as preliminary preparation to transition to another orbit, so as to match ascending nodes by slightly changing the change rate of the ascending node is being studied (NPL 1). For example, assuming a case where in a satellite is on a circular orbit with an orbital altitude of 1000 km and an orbital inclination of 60 degrees as described earlier, changing the right ascension of the ascending node by 30 degrees will be considered. In this case, changing the semi-major axis a by ΔV of 300 [m/s] changes the dΩ/dt, and a maneuver to the target orbital plane will be completed by waiting for approximately 10 weeks thereafter. Note that ΔV of 300 [m/s] assumes initially changing the semi-major axis by 150 [m/s], and restoring the original semi-major axis by 150 [m/s] after completion of the maneuver.

Although the above is but one example, it can be understood that orbit change can be performed by a velocity increment that is clearly smaller than in a case of performing orbit change by impulsive thrust (3000 m/s). Further, allowing for an even longer waiting time can reduce the necessary ΔV even further.

<1-3. Issues with Using J2 Perturbing Force>

In order to efficiently perform multirendezvousing, the application of ΔV such that the effects of the J2 perturbation can be maximally utilized is important. While the earlier example involved changing the semi-major axis a, it can be understood from Equation (1) regarding the ascending node precession rate of the J2 perturbation that the dΩ/dt is dependent on the semi-major axis a, the inclination angle i, and the eccentricity e. Note that the orbit handled herein is an approximately circular orbit, and accordingly the dΩ/dt is actually dependent only on the semi-major axis a and the inclination angle i.

With this understanding, the following three methods are conceivable to change the dΩ/dt.

Method 1: Change the semi-major axis a by applying ΔV in an in-plane direction,
Method 2: Change the orbital inclination i by applying ΔV in an out-of-plane direction, and
Method 3: change both the semi-major axis a and the inclination angle i by applying ΔV that has components of the in-plane direction and the out-of-plane direction.

The amount of change of the dΩ/dt differs for each of the above patterns, even though for the same magnitude of ΔV. For orbit control planners, obtaining a maximally great dΩ/dt with a constant ΔV (i.e., orbital transition can be quickly completed with the same ΔV) is desirable, and there is a need to find a way to apply such ΔV.

However, a way to find an optimal ΔV has not been generalized.

For example, NPL 1 suggests that the dΩ/dt can be changed substantially by applying ΔV that changes an semi-major axis a and the inclination angle i simultaneously in a case where the orbital inclination i at the time of starting is great. Also, NPL 2 states that in studies of SSO missions, the application of ΔV to change the orbital inclination i, and not the altitude a, is effective.

These thus suggest that there is a way of imparting ΔV such that the amount of change of the dΩ/dt is maximized, in accordance with the orbit being handled. In the present disclosure, a control method of an orbital element is proposed in which the effects of J2 perturbation can be obtained most efficiently (i.e., the target orbit can be reached quickest) under a constant ΔV.

[2. Description of Technique]

<2-1: Definition of Right Ascension of the Ascending Node Drift due to J2 Perturbation>

Under J2 perturbation, the right ascension of the ascending node drifts in accordance with Equation (1) above. Now, when defining that $K = 3/2 \times J_2 \times R_E^2 \times \mu_E^{1/2}$, the right ascension of the ascending node precession rate in a circular orbit (e = 0) can be expressed as follows.
[Math 2]

$$\dot{\Omega} = -Ka^{-\frac{7}{2}} \cos i \qquad (2)$$

With the ascending node precession rate on the initial orbit as dΩ/dt_0, and the ascending node precession rate after the application of ΔV as dΩ/dt_1, change of the ascending node precession rate ΔdΩ/dt is defined as follows.
[Math 3]

$$\Delta\dot{\Omega} = \dot{\Omega}_1 - \dot{\Omega}_0 \qquad (3)$$

Applying the same ΔV in different directions result in changes to different orbital elements. For example, assuming a circular orbit, the application of ΔV in the in-plane direction changes the orbital semi-major axis a, while the application of ΔV in the out-of-plane direction changes the orbital inclination i and the right ascension of the ascending node. Accordingly, different values for dΩ/dt_1 are obtained for each case, and as a result, ΔdΔ/dt derived from Equation (3) also result in different values.

<2-2: Overview of Analysis and Prerequisite Conditions>

Even when the magnitude of ΔV is constant, the ΔdΔ/dt is a different value depending on the orbital element being changed. When considering transition to a target orbit, the greatest ΔdΔ/dt is preferably obtained from a constant ΔV. Accordingly, a way to apply an optimal ΔV will be searched for by defining patterns of the application of ΔV, and performing comparison thereof. Methods for the application of ΔV and obtaining ΔdΔ/dt can be divided into the following three patterns, in accordance with Equation (3). Note that it is assumed that the orbits before and after application of ΔV can be approximated as a circular orbit.

(1) Changing ΔdΔ/dt by applying ΔV in the in-plane direction to change the semi-major axis a.
(2) Changing ΔdΔ/dt by applying ΔV in the out-of-plane direction to change the orbital inclination i.
(3) Changing ΔdΔ/dt by applying ΔV in the in-plane and out-of-plane directions at an arbitrary ratio to change both the semi-major axis a and the orbital inclination i.

The following two points will be studied below, to search for efficient orbit control.

(A) Derivation of selection criteria between (1) and (2) by comparing the two when the same ΔV is applied.
(B) Derivation of the optimal ratio and conditional expression for (3), and comparison with (1) and (2)

Note that the following prerequisite conditions are employed in the present analysis.

- ΔV is applied impulsively
- ΔV is sufficiently small in comparison with magnitude $V_0$ of orbital velocity
- Amount of variance in the semi-major axis and the orbital inclination due to ΔV is sufficiently small in comparison with the initial semi-major axis and the orbital inclination, and the eccentricity is constantly 0 (circular orbit).
- When changing the orbital inclination, ΔV is applied at the ascending node or descending node (increase in orbital inclination is greatest, which is advantageous in maximizing ΔdΩ/dt)

[3. Study of whether to change Semi-Major Axis or Inclination Angle]

Here, a comparison is made between the following two cases to determine which one yields a greater ΔdΩ/dt under the condition of a constant ΔV.

(1) Changing ΔdΩ/dt by applying ΔV in the in-plane direction to change the semi-major axis a.
(2) Changing ΔdΩ/dt by applying ΔV in the out-of-plane direction to change the orbital inclination i.

First, the relationship between ΔdΩ/dt and ΔV obtained in each of cases of (1) and (2) is formulated. Then, by comparing the two cases, a conditional expression that serves as a criterion for determining whether to adopt strategy (1) and (2) is derived.

<3-1: ΔdΩ/dt in Case of Changing Semi-Major Axis Using the entire ΔV>

In a case where a circular orbit is assumed and the initial orbital semi-major axis is let to be $a_0$, the orbital semi-major axis a1 after the application of ΔV is given by the following equation based on NPL 4.
[Math 4]

$$a_1 = \left(1 + \frac{2\Delta V}{V_0}\right) a_0 \qquad (4)$$

Letting the ascending node precession rate after the application of ΔV be ΔdΩ/dt_1a, it is expressed by the following expression.
[Math 5]

$$\dot{\Omega}_{1a} = -K\left\{\left(1 + \frac{2\Delta V}{V_0}\right) a_0\right\}^{-\frac{7}{2}} \cos i_0 \qquad (5)$$

<3-2: ΔdΔ/dt in Case of Changing Orbital Inclination Using the entire ΔV>

In a case where ΔV is constant, the variation in the orbital inclination is maximized then the velocity increment is applied at the ascending node or the descending node. Accordingly, here, calculation for changing the orbital inclination is performed assuming ΔV is applied at the ascending node or the descending node. At that time, the following relational expression holds between ΔV and orbital inclination variance Δi (NPL 3).
[Math 6]

$$|\Delta V| = 2V_0 \sin\frac{\Delta i}{2} \qquad (6)$$

Now, since Δi is sufficiently minute, the following relational expression is obtained from Equation (6).
[Math 7]

$$\Delta i \simeq \frac{|\Delta V|}{V_0} \qquad (7)$$

The ascending node precession rate dΩ/dt_1i after the application of ΔV can be expressed as follows, using Δi and Equation (3).
[Math 8]

$$\dot{\Omega}_{1i} = -K a_0^{-\frac{7}{2}} \cos(i_0 \pm \Delta i) \qquad (8)$$

The expression of cos($i_0$ ± Δi) is used because there are two types of conversion methods: conversion to decrease the orbital inclination and conversion to increase the orbital inclination.
From the fact that Δi is sufficiently small and Equation (7), the following holds.
[Math 9]

$$\cos(i_0 \pm \Delta i) \simeq \cos i_0 \mp \sin i_0 \cdot \frac{|\Delta V|}{V_0} \qquad (9)$$

From the above, dΩ/dt_1i can be expressed as follows.
[Math 10]

$$\dot{\Omega}_{1i} = -Ka_0^{-\frac{7}{2}}\left(\cos i_0 \mp \sin i_0 \cdot \frac{|\Delta V|}{V_0}\right) \tag{10}$$

<3-3: Comparison Method of Two Cases>

Due to the properties of Equation (2), the strategy to employ will differ depending on the desired ΔdΩ/dt. For example, when attempting to obtain ΔdΔ/dt > 0 by changing the altitude a, whether the change Δa of the orbital semi-major axis a should be Δa ≥ 0 or should be Δa < 0 varies depending on whether the initial orbital inclination is less than or greater than 90 degrees (deg). Since the same applies to the change in the orbital inclination $i_0$, it can be understood that the strategies can be classified into the following four types of patterns. It should be noted that the change in orbital inclination Δi is defined as a positive value, as in Equation (2).

(Pattern A: When setting ΔdΔ/dt > 0 for $i_0$ < 90 degrees)

- When changing orbital inclination, increase of orbital inclination is necessary
- When changing semi-major axis, Δa > 0 (velocity increment) is necessary

(Pattern B: case of ΔdΔ/dt < 0 at $i_0$ < 90 degrees)

- When changing the orbital inclination, decrease of the orbital inclination is necessary
- When changing semi-major axis, Δa < 0 (velocity decrement) is necessary

(Pattern C: case of ΔdΔ/dt > 0 at $i_0$ ≥ 90 degrees)

- When changing orbital inclination, increase of orbital inclination is necessary
- When changing semi-major axis, Δa < 0 (velocity decrement) is necessary

(Pattern D: case of ΔdΔ/dt < 0 at $i_0$ ≥ 90 degrees)

- When changing orbital inclination, decrease of orbital inclination is necessary
- When changing semi-major axis, Δa > 0 (velocity increment) is necessary

In the following, the analysis focused on pattern A is shown in detail. The other patterns can be analyzed in a similar manner.

<3-4: Comparison Assuming Pattern A>

Here, the case of pattern A, i.e., ΔdΔ/dt > 0 for $i_0$ < 90 degrees, is investigated.

First, in a case where only the semi-major axis is changed using ΔV, letting the obtained ΔdΔ/dt be $\Delta d\Omega/dt_{\Delta a}$, it can be expressed by the following equation using Equations (3) and (5).
[Math 11]

$$\Delta\dot{\Omega}_{\Delta a} = \dot{\Omega}_{1a} - \dot{\Omega}_0 = -K\left(a_1^{-\frac{7}{2}} - a_0^{-\frac{7}{2}}\right)\cos i_0 = -Ka_0^{-\frac{7}{2}}\left\{\left(1 + \frac{2\Delta V}{V_0}\right)^{-\frac{7}{2}} - 1\right\}\cos i_0 \tag{11}$$

Performing first-order approximation by ΔV « $V_0$ enables the following approximation. [Math 12]

$$\Delta\dot{\Omega}_{\Delta a} \simeq Ka_0^{-\frac{7}{2}}\cos i_0 \cdot \frac{7\Delta V}{V_0} \tag{12}$$

Next, in a case where only the orbital inclination is changed using ΔV, letting the obtained ΔdΔ/dt be $\Delta d\Omega/dt_{\Delta i}$, it can be expressed by the following equation using Equations (3) and (10).
[Math 13]

$$\begin{aligned}\Delta\dot{\Omega}_{\Delta i} &= \dot{\Omega}_{1i} - \dot{\Omega}_0 \\ &= -Ka_0^{-\frac{7}{2}}\{\cos(i_0 + \Delta i) - \cos i_0\} \\ &= -Ka_0^{-\frac{7}{2}}\left\{\cos i_0 - \sin i_0 \cdot \frac{|\Delta V|}{V_0} - \cos i_0\right\} \\ &= Ka_0^{-\frac{7}{2}}\sin i_0 \cdot \frac{|\Delta V|}{V_0}\end{aligned} \tag{13}$$

The calculation results of $\Delta d\Omega/dt_{\Delta a}$ and $\Delta d\Omega/dt_{\Delta i}$ for each combination of the initial orbital altitude and initial orbital inclination when $\Delta V$ = 100 m/s are shown in Fig. 6A and Fig. 6B, respectively. Note that the orbital semi-major axis is described by converting it into orbital altitude. Additionally, for $V_0$, $V_0 = sqrt(\mu_E/a_0)$ is substituted.

When comparing Fig. 6A and Fig. 6B, it can be seen that $\Delta d\Omega/dt_{\Delta a} > \Delta d\Omega/dt_{\Delta i}$ holds in regions where the initial orbital inclination is close to 0 deg or 180 deg. On the other hand, it can be seen that $\Delta d\Omega/dt_{\Delta a} < \Delta d\Omega/dt_{\Delta i}$ holds in regions where the initial orbital inclination is near to 90 deg (near polar orbits). It is expected that the magnitude relationship between the two will flip in the region region where the initial orbital inclination is around 80 deg. Note that although the contour plots in Fig. 6A and Fig. 6B represent the case where $\Delta V$ = 100 m/s, similar trends are shown even when $\Delta V$ is varied.

Subsequently, a condition under which the magnitude relationship between $\Delta d\Omega/dt_{\Delta a}$ and $\Delta d\Omega/dt_{\Delta i}$ flips is derived. Since $\Delta d\Omega/dt_{\Delta a}$ and $\Delta d\Omega/dt_{\Delta i}$ are equal in the region where the magnitude relationship flips, the following relation holds from Equations (12) and (13). [Math 14]

$$\begin{aligned}\Delta\dot{\Omega}_{\Delta a} &= \Delta\dot{\Omega}_{\Delta i} \\ \Leftrightarrow Ka_0^{-\frac{7}{2}}\cos i_0 \cdot \frac{7\Delta V}{V_0} &= Ka_0^{-\frac{7}{2}}\sin i_0 \cdot \frac{|\Delta V|}{V_0}\end{aligned} \tag{14}$$

By simplifying the relation in Equation (14), the following relationship is obtained for Pattern A.
[Math 15]

$$\begin{aligned}\tan i_0 &= 7 \\ \therefore i_0 &\fallingdotseq 81.87^\circ\end{aligned} \tag{15}$$

<3-5: Comparison based on Patterns B to D>

In cases based on Patterns B to D, the conditions under which the magnitude relationship flips can be derived in a similar manner to Pattern A. Accordingly, only the results are shown here.

In the case of pattern B, the same conditional expression as Equation (14) for pattern A is obtained. In the cases of Patterns C and D, since the sign of $\Delta V$ in Equation (10) changes, the relationship is expressed by the following equation.
[Math 16]

$$\begin{aligned}\Delta\dot{\Omega}_{\Delta a} &= \Delta\dot{\Omega}_{\Delta i} \\ \Leftrightarrow Ka_0^{-\frac{7}{2}}\cos i_0 \cdot \frac{7\Delta V}{V_0} &= -Ka_0^{-\frac{7}{2}}\sin i_0 \cdot \frac{\Delta V}{V_0}\end{aligned} \tag{16}$$

By simplifying Equation (16), the following relationship is obtained for Patterns C and D.
[Math 17]

$$\begin{aligned}\tan i_0 &= -7 \\ \therefore i_0 &\fallingdotseq 98.13^\circ\end{aligned} \tag{17}$$

From the above, a simple relationship is established: when $81.87° \leq i_0 \leq 98.13°$, a larger $\Delta d\Delta/dt$ can be obtained by applying the entire $\Delta V$ to change in orbital inclination; otherwise, a larger $\Delta d\Delta/dt$ can be obtained by applying the entire $\Delta V$ to the change in the orbital semi-major axis.

For example, when performing multi-rendezvousing for constellation satellites or debris on a polar orbit (when the orbital inclination is around 90 deg), adopting a strategy that uses $\Delta V$ for orbital inclination change can achieve a larger change in $\Delta d\Omega/dt$.

[4. Investigation of Distribution Ratio when Changing Both the Semi-Major Axis and Inclination]

**In** the previous section, changing only one of the semi-major axis and the orbital inclination with a constant ΔV was investigated. However, by allocating ΔV to both the semi-major axis and the orbital inclination, ΔdΔ/dt can be obtained more effectively. This can be easily understood by considering a case where ΔV is allocated such that the change in the orbital inclination and the change in the semi-major axis are equivalent (as illustrated in Fig. 7).

Fig. 7 shows a velocity vector 75 after applying ΔV having a velocity conversion vector 72 such that a velocity vector 73 for inclination angle conversion and a velocity vector 74 for semi-major axis conversion are equal, for an artificial satellite moving with an initial velocity vector 71. At this time, the relation between the total velocity increment ΔV and each of the velocity increments ΔV' in the semi-major axis direction and the inclination direction can be expressed by the following equation.

[Math 18]

$$\begin{aligned}\Delta V^2 &= \Delta V'^2 + \Delta V'^2 - 2\Delta V'^2 \cos\left(\frac{\pi + \Delta i}{2}\right) \\ \Leftrightarrow \Delta V^2 &= 2\left\{1 + \sin\left(\frac{\Delta i}{2}\right)\right\} \Delta V'^2\end{aligned} \qquad (18)$$

Here, since Δi is infinitesimal, Equation (18) can be approximated as follows by first-order approximation.

[Math 19]

$$\begin{aligned}\Delta V^2 &\simeq 2\,\Delta V'^2 \\ \therefore \Delta V' &= \frac{\Delta V}{\sqrt{2}}\end{aligned} \qquad (19)$$

For example, in a case where the total velocity increment is ΔV = = 100 m/s, allocating the velocity increment to the semi-major axis change and the orbital inclination change at a ratio of 1:1 is equivalent to allocating approximately 70.7 m/s to each. That is, it can be seen that a larger ΔdΔ/dt can be obtained as compared to a case where ΔV is allocated to only either the semi-major axis change or the orbital inclination change.

In this section, an attempt is made to formulate the optimal ratio for allocating the velocity increment ΔV to the semi-major axis change and the orbital inclination change. Furthermore, a comparison is performed between the ΔdΔ/dt obtained therefrom and the results obtained in Section 3.

<4-1: Calculation of Optimal Distribution Ratio of ΔV≥

In a case where the semi-major axis and the orbital inclination are changed simultaneously at the ascending node or the descending node, the total velocity increment ΔV, the initial velocity $V_0$, the velocity $V_1$ after conversion, and the orbital inclination increment Δi satisfy the following relation based on the law of cosines (see NPL 5).

[Math 20]

$$\begin{aligned}\Delta V &= \sqrt{V_0^2 - 2V_0V_1\cos\Delta i + V_1^2} \\ &= \sqrt{V_0^2(\sin^2\Delta i + \cos^2\Delta i) - 2V_0V_1\cos\Delta i + V_1^2} \\ &= \sqrt{V_0^2\sin^2\Delta i + (V_0\cos\Delta i - V_1)^2} \\ &\approx \sqrt{V_0^2\Delta i^2 + (V_0 - V_1)^2}\end{aligned} \qquad (20)$$

Letting the velocity increments allocated to the inclination angle change and the semi-major axis change be $\Delta V_i$ and $\Delta V_a$, respectively, the relations of these can be expressed as by the following Equations.

[Math 21]

$$\Delta V_i = 2V_0 \sin\frac{\Delta i}{2} \simeq V_0 \cdot \Delta i \qquad (21)$$

[Math 22]

$$\Delta V_a = V_1 - V_0 \tag{22}$$

Assuming a case where the velocity increment is allocated at a ratio of ΔVa = m•ΔV$_1$ (where m is a real number), an node precession rate dΩ/dt$_{1\Delta a\&\Delta i}$ obtained in that case is derived. First, V$_1$ can be expressed by the following equation.
[Math 23]

$$V_1 = \Delta V_a + V_0 = m \cdot \Delta V_i + V_0 = (m \cdot \Delta i + 1) \cdot V_0 \tag{23}$$

Substituting Equation (23) into Equation (20) gives the following.
[Math 24]

$$\Delta V = \sqrt{V_0^2 \Delta i^2 + (V_0 - V_1)^2} = \sqrt{V_0^2 \Delta i^2 + (V_0 - (m \cdot \Delta i + 1) \cdot V_0)^2} = \Delta i \cdot \sqrt{1 + m^2} \cdot V_0 \tag{24}$$

Accordingly, the relation of Δi and ΔV can be expressed as follows.
[Math 25]

$$\Delta i = \frac{\Delta V}{V_0} \cdot \sqrt{\frac{1}{1 + m^2}} \tag{25}$$

By substituting Equation (25) into Equations (21) and (22), a relational expression between ΔV$_a$ and ΔV can be derived as follows.
[Math 26]

$$\Delta V_a = V_1 - V_0 = (m \cdot \Delta i + 1) \cdot V_0 - V_0 = m \cdot \Delta i \cdot V_0 = \Delta V \cdot \sqrt{\frac{m^2}{1 + m^2}} \tag{26}$$

Here, the semi-major axis a$_1$ following velocity increment can be found as follows, using Equations (4) and (26).
[Math 27]

$$a_1 = \left(1 + \frac{2\Delta V_a}{V_0}\right) a_0 = \left(1 + \frac{2\Delta V}{V_0} \cdot \sqrt{\frac{m^2}{1 + m^2}}\right) \cdot a_0 \tag{27}$$

From Equations (2), (25), and (27), dΩ/dt$_{1\Delta a\&\Delta i}$ can be expressed as follows.
[Math 28]

$$\begin{aligned}
\dot{\Omega}_{1\Delta a\&\Delta i} &= -K a_1^{-\frac{7}{2}} \cos i_1 \\
&= -K a_0^{-\frac{7}{2}} \cdot \left(1 + \frac{2\Delta V}{V_0} \cdot \sqrt{\frac{m^2}{1 + m^2}}\right)^{-\frac{7}{2}} \cdot \cos(i_0 \pm \Delta i) \\
&= -K a_0^{-\frac{7}{2}} \cdot \left(1 + \frac{2\Delta V}{V_0} \cdot \sqrt{\frac{m^2}{1 + m^2}}\right)^{-\frac{7}{2}} \cdot (\cos i_0 \cos \Delta i \mp \sin i_0 \sin \Delta i) \\
&\simeq -K a_0^{-\frac{7}{2}} \cdot \left(1 + \frac{2\Delta V}{V_0} \cdot \sqrt{\frac{m^2}{1 + m^2}}\right)^{-\frac{7}{2}} \cdot (\cos i_0 \mp \sin i_0 \, \Delta i) \\
&= -K a_0^{-\frac{7}{2}} \cdot \left(1 + \frac{2\Delta V}{V_0} \cdot \sqrt{\frac{m^2}{1 + m^2}}\right)^{-\frac{7}{2}} \cdot \left(\cos i_0 \mp \sin i_0 \cdot \frac{\Delta V}{V_0} \cdot \sqrt{\frac{1}{1 + m^2}}\right)
\end{aligned} \tag{28}$$

Since $\Delta V \ll V_0$, by performing first-order approximation to $\Delta V/V_0$, Equation (28) can be approximated as follows.
[Math 29]

$$\dot{\Omega}_{1\Delta a\&\Delta i} \simeq -Ka_0^{-\frac{7}{2}} \cdot \left( \cos i_0 - \frac{7\Delta V}{V_0} \cdot \sqrt{\frac{m^2}{1+m^2}} \cdot \cos i_0 \mp \frac{\Delta V}{V_0} \cdot \sqrt{\frac{1}{1+m^2}} \cdot \sin i_0 \right) \qquad (29)$$

Subsequently, ΔdΔ/dt is calculated. Here, similar to Section 3-3, the cases can be classified into four patterns (A to D). Accordingly, Pattern A (the case where ΔdΔ/dt > 0 for $i_0$ < 90 degrees) is described in detail below, and only the results are show for the other patterns.

When allocating ΔV to the semi-major axis change and the orbital inclination change at a ratio of m: 1, letting the obtained ΔdΔ/dt be $\Delta d\Omega/dt_{_\Delta a\&\Delta i}$, this can be expressed by the following equation using Equations (3) and (29).
[Math 30]

$$\begin{aligned} \Delta\dot{\Omega}_{\Delta a\&\Delta i} &= \dot{\Omega}_{1\Delta a\&\Delta i} - \dot{\Omega}_0 \\ &= -Ka_0^{-\frac{7}{2}} \\ &\cdot \left( \cos i_0 - \frac{7\Delta V}{V_0} \cdot \sqrt{\frac{m^2}{1+m^2}} \cdot \cos i_0 - \frac{\Delta V}{V_0} \cdot \sqrt{\frac{1}{1+m^2}} \cdot \sin i_0 \right) \\ &+ Ka_0^{-\frac{7}{2}} \cos i_0 \\ &= -Ka_0^{-\frac{7}{2}} \cdot \left( -\frac{7\Delta V}{V_0} \cdot \sqrt{\frac{m^2}{1+m^2}} \cdot \cos i_0 - \frac{\Delta V}{V_0} \cdot \sqrt{\frac{1}{1+m^2}} \cdot \sin i_0 \right) \end{aligned} \qquad (30)$$

Fig. 8 illustrates the relationship between m and $\Delta d\Omega/dt_{_\Delta a\&\Delta i}$ in a case where ΔV = 100 m/s, initial orbital altitude is 600 km, and the orbital inclination is 80 degrees. From Fig. 8, it can be understood that $\Delta d\Omega/dt_{_\Delta a\&\Delta i}$ has a local maximum. When $\Delta d\Omega/dt_{_\Delta a\&\Delta i}$ has a local maximum, $\Delta d\Omega/dt_{_\Delta a\&\Delta i}$ is maximized, which is to say that ΔdΔ/dt can be obtained most efficiently. Accordingly, in order to investigate the m that gives the local maximum, the following equation is obtained by partially differentiating Equation (28) with respect to m.
[Math 31]

$$\begin{aligned} \frac{\partial}{\partial m}\left(\Delta\dot{\Omega}_{\Delta a\&\Delta i}\right) &= \frac{\partial}{\partial m}\left\{ -Ka_0^{-\frac{7}{2}} \cdot \left( -\frac{7\Delta V}{V_0} \cdot \sqrt{\frac{m^2}{1+m^2}} \cdot \cos i_0 - \frac{\Delta V}{V_0} \cdot \sqrt{\frac{1}{1+m^2}} \cdot \sin i_0 \right) \right\} \\ &= Ka_0^{-\frac{7}{2}} \cdot \frac{\Delta V}{V_0} \cdot \frac{\sin i_0 \cdot m - 7\cos i_0}{(m^2+1)^{\frac{3}{2}}} \end{aligned} \qquad (31)$$

Since m is a real number, the m that gives the local maximum is found through the following equation.
[Math 32]

$$\begin{aligned} \sin i_0 \cdot m - 7\cos i_0 = 0 \\ \therefore m = \frac{7}{\tan i_0} \end{aligned} \qquad (32)$$

Also, in the case of Pattern C shown in Subsection 3-3, a local maximum is similarly obtained when Equation (32) is satisfied. Conversely, in the cases of Patterns B and D, a local maximum is obtained when the following equation is satisfied.
[Math 33]

$$\begin{aligned} -\sin i_0 \cdot m - 7\cos i_0 = 0 \\ \therefore m = -\frac{7}{\tan i_0} \end{aligned} \qquad (33)$$

From the above, it has been found that the value of m that maximizes $\Delta d\Omega/dt_{_\Delta a\&\Delta i}$ is determined in accordance with $i_0$. Fig. 9A and Fig. 9B plot the relationship between m and $i_0$ is shown in. Fig. 9A is a diagram of a range of the inclination from 0 degrees to 90 degrees, and Fig. 9B is a enlarged diagram showing a range where i0 is near 90 degrees (70 degrees to 90 degrees). The results show a trend that, in a region where i0 is close to 0 degrees, it is preferable to allocate almost all of the velocity increment to change in the semi-major axis (m is increased), and in a region where i0 is close to 90 degrees, it is preferable to allocate almost all of the velocity increment to the change in the orbital inclination (m is decreased). It can be said that this tendency is similar to the tendency described in Section 3. Furthermore, since m = 1 is obtained by substituting $i_0$ = 81.87 degrees obtained from Equation (17) in Section 3, it can also be understood that, in the case of $i_0$ = 81.87 degrees where the effect of applying $\Delta V$ to the semi-major axis change and the effect of the applying $\Delta V$ to the orbital inclination change compete with each other, it is preferable to allocated the velocity increment equally to both (m = 1).

Fig. 10 is a diagram in which $\Delta d\Omega/dt_{_\Delta a\&\Delta id}$ is calculated and plotted using $i_0$ obtained by Equation (33). Note that $\Delta V$ = 100 m/s is set in order to match the calculation conditions with those of Fig. 6A and Fig. 6B. Comparing Fig. 10 with Fig. 6A and Fig. 6B, it can be seen that changing both of the semi-major axis and the orbital inclination results in a larger value of $\Delta d\Delta/dt$ overall, that is, $\Delta d\Delta/dt$ can be changed more effectively.

Note that the effects of improving $\Delta d\Delta/dt$ by allocating $\Delta V$ to both the semi-major axis and the inclination angle, as compared to the case of allocating $\Delta V$ to either one of them, is highest when $i_0$ = 81.87 degrees (the point where the effects of the semi-major axis change and the inclination change compete with each other), and an improvement of approximately 30% can be obtained. In the case of $i_0$ = 85 degrees, where the inclination is increased by approximately 5 degrees from the competition point, the improvement effects is about 15%. In the cases of $i_0$ = 75 degrees and $i_0$ = 70 degrees, where the inclination is decreased by approximately 5 degrees and approximately 10 degrees from the competition point, the improvement effects are approximately 10% and 5%, respectively. Additionally, it can be seen that as the orbital incline deviates from the competition point (81.87 degrees) the superiority of changing both the semi-major axis and the decreases.

[5. Summarization]

Focusing on the drift of the right ascension of the ascending node caused by J2 perturbation, an analysis was performed for conditions for obtaining the maximum $d\Omega/dt$ by applying a constant $\Delta V$, and the following results were obtained.

It was shown that in a case $\Delta V$ is allocated to only either the semi-major axis change or the inclination change, it is advantageous to change the inclination angle within a range of 81.87 degrees $\leq i_0 \leq$ 98.13 degrees, and it is advantageous to change the semi-major axis in other ranges.

Furthermore, it was shown that, in a case where $\Delta V$ is allocated to both changes in the semi-major axis and the inclination angle, it is most effective to allocate it at a ratio of $\pm 7/\tan(i_0)$:1, respectively.

[First Embodiment]

A spacecraft according to a first embodiment of the present invention will be described below. The spacecraft according to the present embodiment is an artificial satellite that matches its orbit with an orbit of an object in outer space, and thereafter emits a laser beam to the object so as to eliminate the object. The spacecraft according to the present embodiment performs multi-rendezvous in order to approach a plurality of objects having different orbits and eliminate the objects.

The objects are artificial objects including debris (space junk, space debris) and objects other than artificial objects (e.g., meteorites or the like) that are present in outer space. The debris includes an artificial satellite that has become uncontrollable, an artificial satellite that has become unneeded upon termination of operation, and a part of artificial satellite released by a collision or the like. In the present embodiment, an example will be described in which an end-of-life satellite in the LEO constellation or debris in the SSO is treated as the object.

In order to perform the multi-rendezvous, the spacecraft according to the present embodiment needs to perform orbit control. The orbits of debris are all orbits in which the altitude and inclination angle are substantially the same and the right ascending nodes are different. Accordingly, the spacecraft according to the present embodiment performs orbit control for transition to a target orbit, in which the inclination angle is approximately the same as the current orbit and the right ascension of the ascending node is different. In particular, the space craft according to the present embodiment performs orbit control so as to shorten an orbit change time per consumed fuel.

Note that, in the present embodiment, an example in which an artificial satellite is used as the spacecraft will be described, however, this is not limited to unmanned spacecrafts, and a manned spacecraft may be used as the spacecraft. Also, equipment (a sub-satellite) that is loaded in the artificial satellite (a carrier) or the like may be used as the spacecraft.

<Configuration>

Fig. 1 is a diagram illustrating a configuration of a spacecraft 100 according to the present embodiment. The spacecraft 100 is an artificial satellite that has laser emission functions, and that performs multi-rendezvous to eliminate multiple pieces of debris. The spacecraft 100 is equipped with a control unit 101, a position acquisition unit 102, a detecting unit 103, an attitude control unit 104, a propulsion unit 105, a communication unit 106, and a laser device 107.

The control unit 101 is a computer including a processor, a main storage device, and an auxiliary storage device, and performs control of the units of the spacecraft 100 by the processor loading programs stored in the auxiliary storage device to the main storage device and executing the programs. The control unit 101 in particular performs control when changing orbits, control of detection of debris and laser emission to the debris, and so forth.

The position acquisition unit 102 acquires position information of the spacecraft 100. The position acquisition unit 102 performs, for example acquisition of position information from a GPS device, estimation of position information from other various types of sensors, and so forth. The position acquisition unit 102 may also acquire position information of the spacecraft 100 from a controller device on the ground via the communication unit 106.

The detecting unit 103 is a functional unit that detects distance between the spacecraft 100 and debris 200, and position, size, shape, and so forth of the debris. The detecting unit 103 acquires such detection information using, for example, an imaging sensor (camera) and Lidar.

The attitude control unit 104 controls attitude of the spacecraft 100 using a reaction wheel. Specifically, changing angular momentum of a flywheel adjusts the attitude of the spacecraft 100. The attitude control unit 104 may also control the attitude of the spacecraft 100 using an attitude control thruster.

The propulsion unit 105 generates thrust to perform fine-tuning of the orbit of the spacecraft 100. The propulsion unit 105 is, for example, a rocket thruster, and generates propulsion force by ejecting gas from a chemical reaction of fuel.

The communication unit 106 is a functional unit that communicates with monitoring devices on the ground. The spacecraft 100 acquires information regarding orbits of debris, regions suitable for laser emission to the debris, and safe areas via the communication unit 106.

The laser device 107 is a device that outputs laser. The laser device 107 is, for example, a pulsed laser system that uses fiber lasers in parallel. Note, however, that solid-state lasers and various other types of lasers may be used as the laser device 107. The laser device 107 may also have a focusing unit for converging laser to be emitted, and a steering to change direction of emission of the laser.

<Orbital Control Method>

Next, an orbit control method of the spacecraft 100 according to the present embodiment will be described.

Fig. 2 is a diagram for describing orbits of the spacecraft 100 and the debris 200. Fig. 2 illustrates a current orbit 21 and a target orbit 22. The current orbit 21 is an orbit that the spacecraft 100 is currently circling, and the target orbit 22 is an orbit that the debris 200 is currently circling. The spacecraft 100 is assumed to change orbits from the current orbit 21 to the orbit of the debris 200, and accordingly the orbit of the debris 200 is referred to as target orbit 22 here. Note that the current orbit 21 and the target orbit 22 are both the low earth orbit (LEO) or the sun synchronous orbit (SSO) about the Earth 20. Note that, among the points where the orbital plane intersects with the equatorial plane 23 of the Earth 20, the point at which the spacecraft 100 moves from south to north is called ascending node, and the point at which the spacecraft moves from north to south is called descending node. The ascending node 24 is illustrated in Fig. 2.

Fig. 3 is a diagram for describing the travelling direction of the spacecraft 100, and indicates that the spacecraft 100 is circling the orbit 30. In this case, the travelling direction 31 is a direction in which the spacecraft 100 is traveling, a geocentric direction 33 is a direction from the spacecraft 100 toward the center of the Earth, and the out-of-plane direction 32 is a direction that is orthogonal to the travelling direction 31 and the geocentric direction 33. The travelling direction 31 and the geocentric direction 33 are parallel to the orbital plane 30, and the out-of-plane direction 32 is orthogonal to the orbital plane 30. Note that the out-of-plane direction 32 is defined such that the travelling direction 31, the out-of-plane direction 32, and the geocentric direction 33 are a right-handed coordinate system in this order.

Fig. 4 is a flowchart showing a flow of an orbit control method carried out by the control unit 101 of the spacecraft 100.

In step S41, the control unit 101 acquires the current orbit 21 of the spacecraft 100 and the target orbit 22 (orbit of debris 200). The method of acquiring the orbits is not limited in particular, but conceivably may be acquired from a monitoring device on the ground, for example, via the communication unit 106.

In step S42, the control unit 101 decides an acceleration direction for changing orbits, i.e., a direction in which to apply thrust. Here, the acceleration direction has components of the travelling direction 31 and the out-of-plane direction 32, in which the travelling direction component is denoted as $\Delta V_a$, and the out-of-plane direction component is denoted as $\Delta V_i$. The control unit 101 decides the acceleration direction such as $\Delta V_a : \Delta V_i = \pm 7/\tan(i_0)$. Here, $i_0$ is the orbital inclination of the current orbit 21. In further detail, the control unit 101 sets $\Delta Va = (7/\tan(i_0)) \times \Delta Vi$ when $i_0 < 90°$, and sets $\Delta V_a = -(7/\tan(i_0))$

$\times$ ΔVi when $i_0 > 90°$.

In step S43, the control unit 101 stands by until the spacecraft 100 arrives at the ascending node or the descending node, and performs acceleration of ΔV/2 in the acceleration direction that was decided in step S42 at the ascending node or the descending node. ΔV is decided in advance, and may be 100 m/s, for example. Note that the control unit 101 uses the attitude control unit 104 to orient the attitude of the spacecraft 100 in the acceleration direction by the time of arriving at the ascending node or the descending node, and performs acceleration using the propulsion unit 105 at the point of arriving at the ascending node or the descending node. Note, however, that the control method is not limited in particular, as long as capable of accelerating in the acceleration direction that was decided. As another example, thrusters corresponding to a plurality of directions can be attached, and acceleration can be performed in the direction that was decided by combining these thrusters as appropriate, at the point of arriving at the ascending node or the descending node.

In step S44, the control unit 101 stands by until the orbit of the spacecraft 100 is transitioned to the target orbit. Acceleration in the travelling direction 31 changes the orbital altitude of the spacecraft 100, and acceleration in the out-of-plane direction 32 changes the orbital inclination of the spacecraft 100. In accordance with the orbital altitude and the orbital inclination after the change, the ascending node precession rate due to the J2 perturbation force shown in Equation (1) is obtained.

In step S45, the control unit 101 further stands by until the spacecraft 100 arrives at the ascending node or the descending node, and performs deceleration of ΔV/2 in the acceleration direction that was decided in step S42 (acceleration of -ΔV/2 in acceleration direction that was decided) at the ascending node or the descending node. Note that the control unit 101 uses the attitude control unit 104 to orient the attitude of the spacecraft 100 in a direction opposite to the acceleration direction that was decided in step S42 by the time of arriving at the ascending node or the descending node, and performs acceleration using the propulsion unit 105 at the point of arriving at the ascending node or the descending node. Also, as described above, acceleration may be performed in the direction opposite to the acceleration direction that was decided by combining the plurality of thrusters as appropriate, at the point of arriving at the ascending node or the descending node.

Thus, the orbit of the spacecraft 100 is transitioned to the target orbit 22. Thereafter, the control unit 101 controls the spacecraft 100 to approach the debris 200, and emits laser to the debris 200 using the detecting unit 103 and the laser device 107, thereby eliminating the debris 200.

According to the present embodiment, the orbit can be transitioned to the target orbit in the shortest amount of time, under constant thrust, i.e., under constant fuel consumption. Accordingly, orbital transition completion time per fuel consumption amount can be shortened.

[Second Embodiment]

According to a second embodiment of the present invention, the configuration of the spacecraft is the same as in the first embodiment, and the method of orbit control differs from the first embodiment. Fig. 5 is a flowchart showing a flow of the orbit control method according to the present embodiment. In comparison with the first embodiment, the processing in step S42 is replaced by step S50 in the orbit control method according to the present embodiment. Description of step S41 and steps S43 to S45 will be omitted, and description will be made below primarily regarding step S50.

The processing of step S50 is processing for deciding the acceleration direction, and includes sub-steps of the following steps S51 to S53.

In step S51, the control unit 101 determines whether or not the orbital inclination $i_0$ of the current orbit 21 of the spacecraft 100 satisfies $81.87° \leq i_0 \leq 98.13°$. In a case where this condition is satisfied, the processing advances to step S52, and the control unit 101 decides the acceleration direction to be the out-of-plane direction 32. On the other hand, when this condition is not satisfied, the processing advances to step S53, and the control unit 101 decides the acceleration direction to be the travelling direction 31.

Acceleration in step S43 and S45 is performed in the direction decided in step S50, and in the opposite direction therefrom.

Efficient orbit transition can be performed in this way as well. Note that while the technique according to the first embodiment is superior from the perspective of orbital transition completion time per consumed fuel, this way is advantageous in that control is simple in that the acceleration direction is one of the travelling direction and the out-of-plane direction. The acceleration direction that enables more efficient orbit transition can be decided in accordance with the current orbit of the spacecraft 100.

[Other Embodiments]

Configurations of the above-described embodiments and modifications can be used in combination as appropriate, without departing from the technical spirit and scope of the present invention. Also, the present invention may be realized with modifications made as appropriate, without departing from the technical spirit and scope thereof.

In the first embodiment and the second embodiment, description has been made that acceleration and deceleration are performed just once (one set). However, acceleration and deceleration may be performed a plurality of times (a plurality of sets). In this case, the control unit 101 performs control so as to first perform acceleration a plurality of times, and thereafter to perform deceleration by the same number of times. Here, the sum of thrust applied in the plurality of times of acceleration and the thrust applied in the plurality of times of deceleration are the same value that is set in advance. Note that in a case where the plurality of times of acceleration are performed in relatively short time intervals, the control unit 101 may perform the processing of deciding the acceleration direction (step S42 or S50) just once, and accelerate in the same direction in all accelerations. Alternatively, the control unit 101 may perform deciding processing of acceleration direction each time that acceleration is performed. The same is true for deceleration.

Also, in the first embodiment and the second embodiment, description has been made that acceleration and deceleration are performed at the ascending node or the descending node. However, acceleration and deceleration may be performed positions other than at the ascending node or the descending node. The advantage of performing acceleration at the ascending node or the descending node is that the rate of change of the orbital inclination is maximal. Accordingly, in a case of accelerating in the travelling direction to change the orbital altitude, there is no decrease in efficiency even when accelerating at other than the ascending node or the descending node. Also, even in a case of accelerating in the out-of-plane direction to change the orbital inclination, acceleration may be performed at other than the ascending node or the descending node, as long as a slight decrease in efficiency is allowable.

[Reference Signs List]

| | |
|---|---|
| 100 | Spacecraft |
| 101 | Control unit |
| 102 | Position acquisition unit |
| 103 | Detecting unit |
| 104 | Attitude control unit |
| 105 | Propulsion unit |
| 106 | Communication unit |
| 107 | Laser device |
| 200 | Debris |

## Claims

**1.** A control method for transitioning an orbit of a spacecraft to a target orbit of which an altitude and an inclination angle are the same as those of a current orbit, and an ascending node is different therefrom, the control method comprising:

a deciding step of deciding an acceleration direction;
a first acceleration step of accelerating in the decided acceleration direction;
a standby step of standing by until the orbit becomes the target orbit; and
a second acceleration step of accelerating in an opposite direction from the decided acceleration direction,
wherein a relation of $\Delta Va = \pm(7/\tan(i_0)) \times \Delta Vi$ is satisfied, in which $\Delta Va$ is a travelling direction component of the acceleration direction, $\Delta Vi$ is an out-of-plane direction component of the acceleration direction, and $i_0$ is the inclination angle of the current orbit.

**2.** The control method of a spacecraft according to claim 1,
wherein the acceleration direction satisfies:

$$\text{a relation of } \Delta V_a = (7/\tan(i_0)) \times \Delta Vi \text{ when } i_0 < 90^\circ,$$

and

$$\text{a relation of } \Delta V_a = -(7/\tan(i_0)) \times \Delta Vi \text{ when } i_0 > 90^\circ.$$

**3.** The control method of a spacecraft according to claim 1, wherein a magnitude of acceleration in the first acceleration step and the second acceleration step is a predetermined value.

**4.** The control method of a spacecraft according to claim 1,

wherein the first acceleration step is executed a plurality of times,
wherein the second acceleration step is executed the same number of times as the first acceleration step, and
wherein a sum of a magnitude of acceleration in the plurality of times of the first acceleration step is a predetermined value.

**5.** The control method of a spacecraft according to claim 1, wherein the first acceleration step and the second acceleration step are executed when the spacecraft is situated at the ascending node or a descending node.

**6.** A control method for transitioning an orbit of a spacecraft to a target orbit of which an altitude and an inclination angle are the same as those of a current orbit, and an ascending node is different therefrom, the control method comprising:

a deciding step of deciding whether to make the acceleration direction parallel to a travelling direction or an out-of-plane direction;
a first acceleration step of accelerating in the decided acceleration direction;
a standby step of standing by until the orbit becomes the target orbit; and
a second acceleration step of accelerating in an opposite direction from the decided acceleration direction,
wherein the acceleration direction is set to be parallel to the out-of-plane direction if an inclination angle $i_0$ satisfies $81.87° < i_0 < 98.13$, the acceleration direction is set to be parallel to the travelling direction otherwise.

**7.** The control method of a spacecraft according to claim 6, wherein a thrust applied in the first acceleration step and the second acceleration step is a predetermined value.

**8.** The control method of a spacecraft according to claim 6,

wherein the first acceleration step is executed a plurality of times,
wherein the second acceleration step is executed the same number of times as the first acceleration step, and
wherein a sum of thrust applied in the plurality of times of the first acceleration step is a predetermined value.

**9.** The control method of a spacecraft according to claim 6, wherein the first acceleration step and the second acceleration step are executed when the spacecraft is situated at the ascending node or a descending node.

**10.** A spacecraft, comprising:

a control unit;
an attitude control unit; and
a propulsion unit, wherein the control unit performs control to
decide an acceleration direction such that a relation of $\Delta Va = \pm(7/\tan(i_0)) \times \Delta Vi$ is satisfied, in which $\Delta Va$ is a travelling direction component of an acceleration direction, $\Delta Vi$ is an out-of-plane direction component of the acceleration direction, and $i_0$ is an inclination angle of a current orbit,
accelerate in the decided acceleration direction, using the attitude control unit and the propulsion unit,
stand by until the orbit becomes a target orbit, and
accelerate in an opposite direction from the decided acceleration direction, using the attitude control unit and the propulsion unit.

**11.** A spacecraft, comprising:

a control unit;
an attitude control unit; and
a propulsion unit, wherein the control unit performs control to
set an acceleration direction to be an out-of-plane direction if an inclination angle $i_0$ of a current orbit satisfies $81.87° < i_0 < 98.13$, and set the acceleration direction to be a travelling direction otherwise,
accelerate in the decided acceleration direction, using the attitude control unit and the propulsion unit,
stand by until the orbit becomes a target orbit, and
accelerate in an opposite direction from the decided acceleration direction, using the attitude control unit and the propulsion unit.

FIG. 1

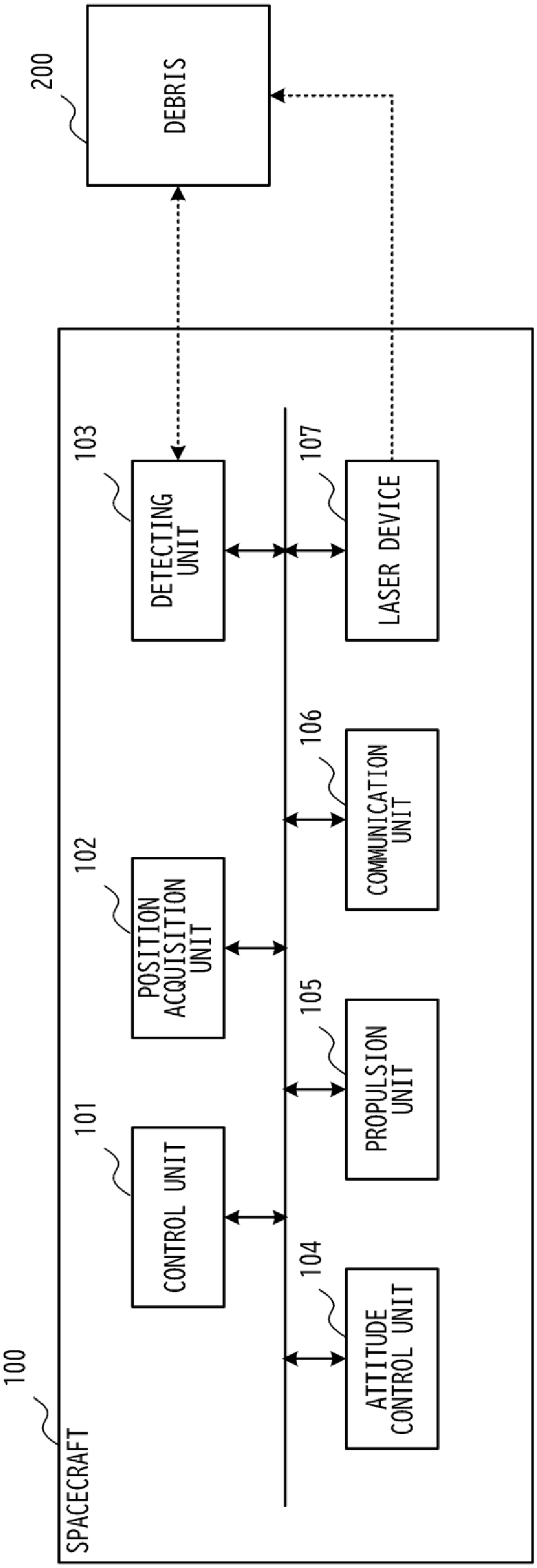
SPACECRAFT
100
200
DEBRIS
101
CONTROL UNIT
102
POSITION ACQUISITION UNIT
103
DETECTING UNIT
104
ATTITUDE CONTROL UNIT
105
PROPULSION UNIT
106
COMMUNICATION UNIT
107
LASER DEVICE

FIG. 2

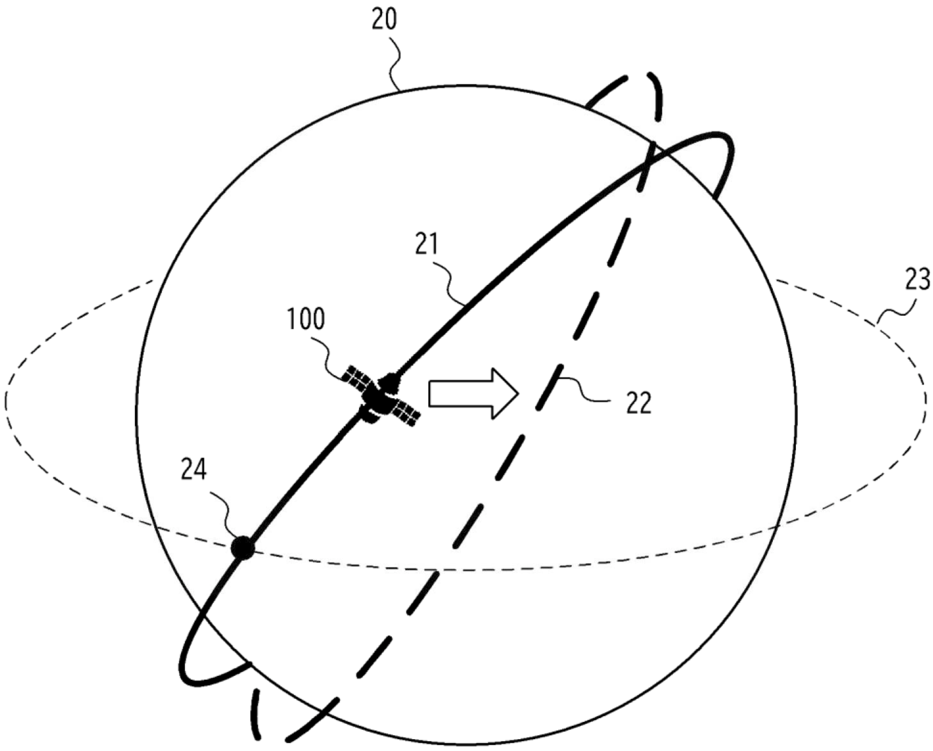

FIG. 3

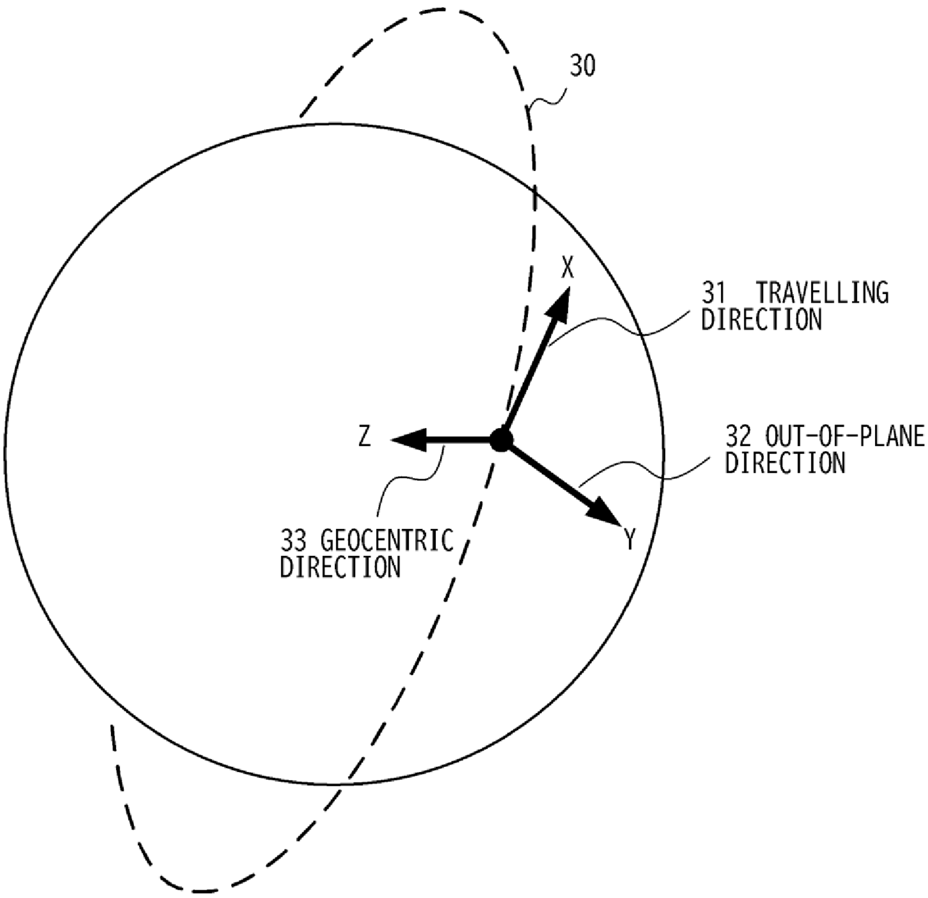
30
X
31 TRAVELLING DIRECTION
Z
32 OUT-OF-PLANE DIRECTION
33 GEOCENTRIC DIRECTION
Y

FIG. 4

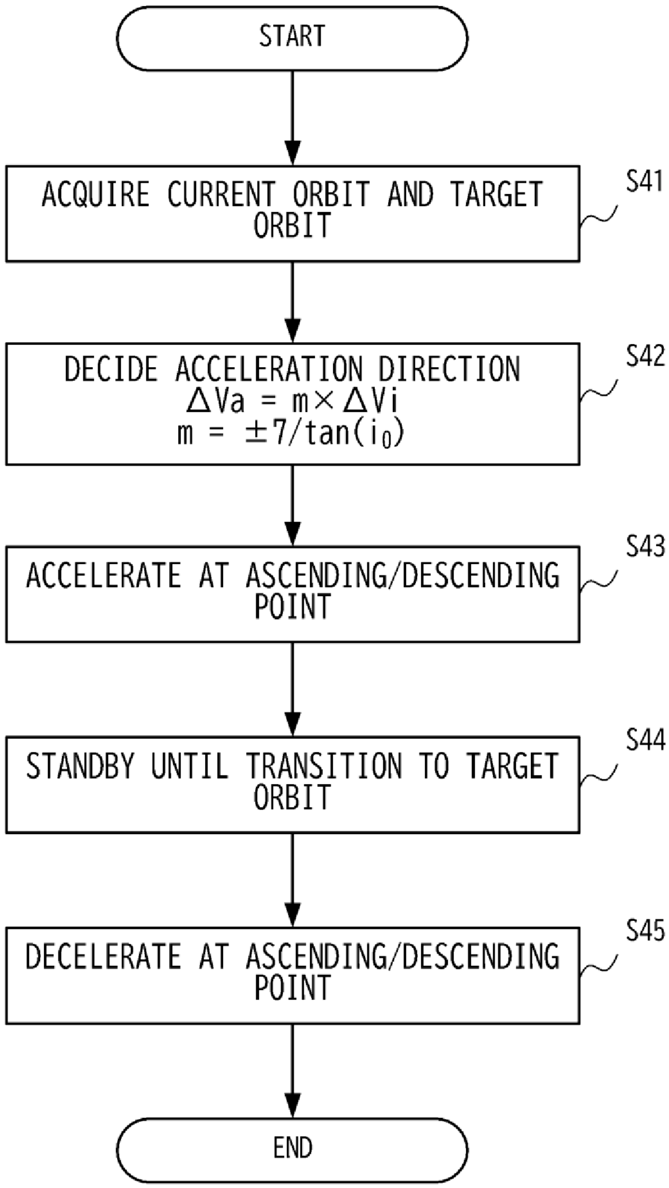
START
ACQUIRE CURRENT ORBIT AND TARGET ORBIT
S41
DECIDE ACCELERATION DIRECTION
$\Delta Va = m \times \Delta Vi$
$m = \pm 7/\tan(i_0)$
S42
ACCELERATE AT ASCENDING/DESCENDING POINT
S43
STANDBY UNTIL TRANSITION TO TARGET ORBIT
S44
DECELERATE AT ASCENDING/DESCENDING POINT
S45
END

FIG. 5

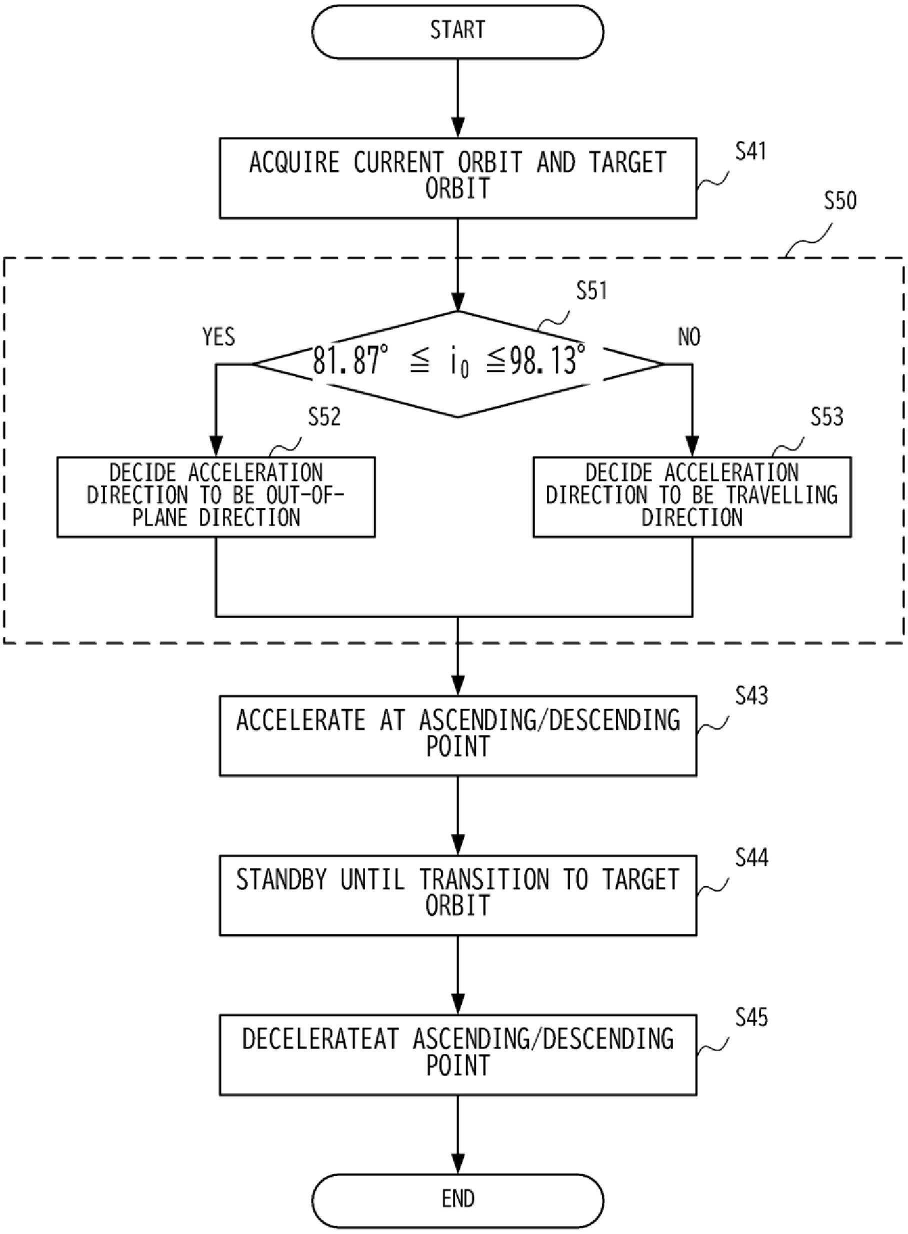
START
ACQUIRE CURRENT ORBIT AND TARGET ORBIT
S41
S50
S51
YES
NO
81.87° ≦ i0 ≦98.13°
S52
S53
DECIDE ACCELERATION DIRECTION TO BE OUT-OF-PLANE DIRECTION
DECIDE ACCELERATION DIRECTION TO BE TRAVELLING DIRECTION
ACCELERATE AT ASCENDING/DESCENDING POINT
S43
STANDBY UNTIL TRANSITION TO TARGET ORBIT
S44
DECELERATEAT ASCENDING/DESCENDING POINT
S45
END

FIG. 6

(A) CONTOUR PLOT OF INCREASE $\Delta\dot{\Omega}_{\Delta a}$ [deg/year] OF ASCENDING NODE PRECESSION RATE IN CASE OF CHANGING ORBITAL ALTITUDE AT $\Delta V$=100m/s

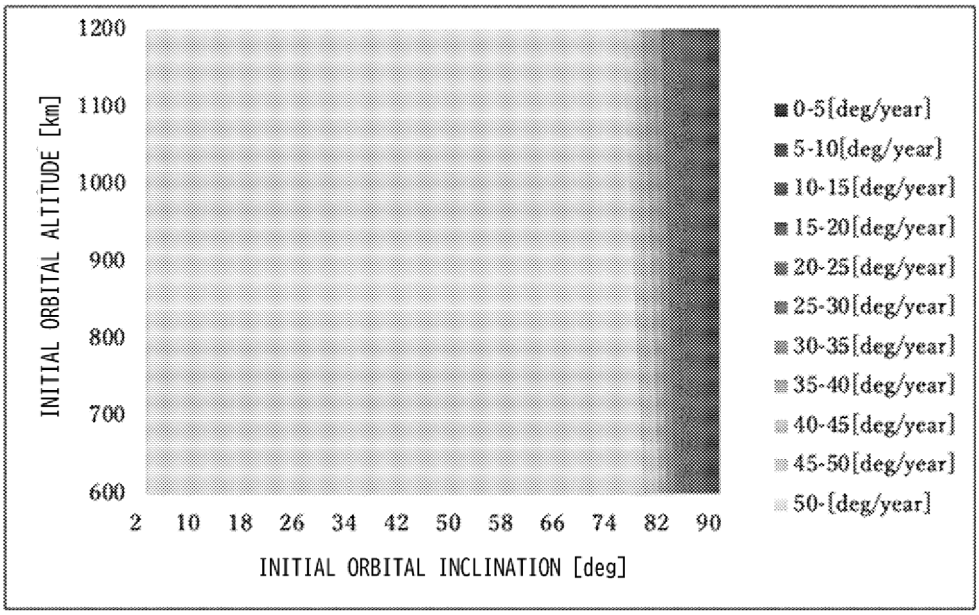


(B) CONTOUR PLOT OF INCREASE $\Delta\dot{\Omega}_{\Delta i}$ [deg/year] OF ASCENDING NODE PRECESSION RATE IN CASE OF CHANGING ORBITAL INCLINATION AT $\Delta V$=100m/s

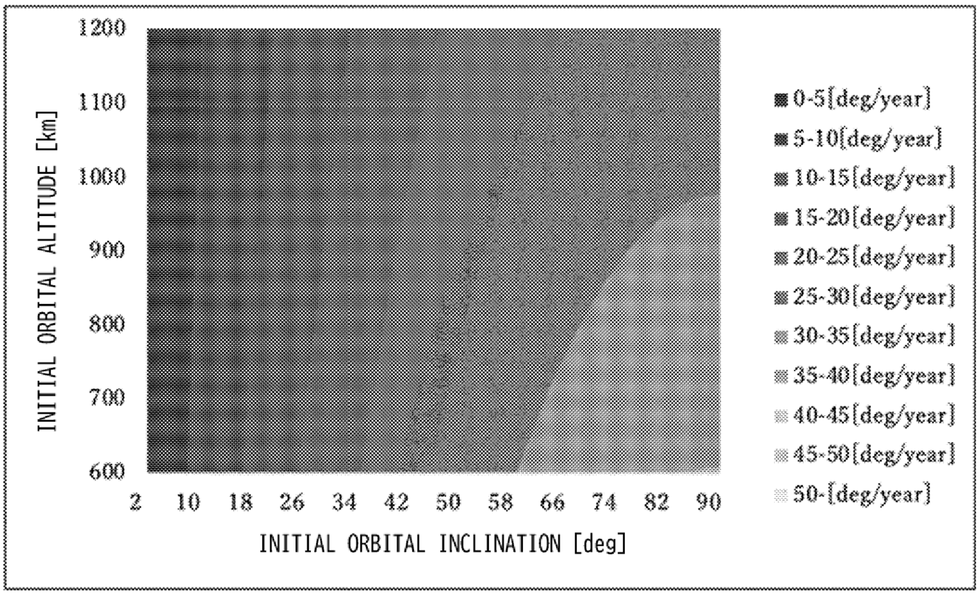

FIG. 7

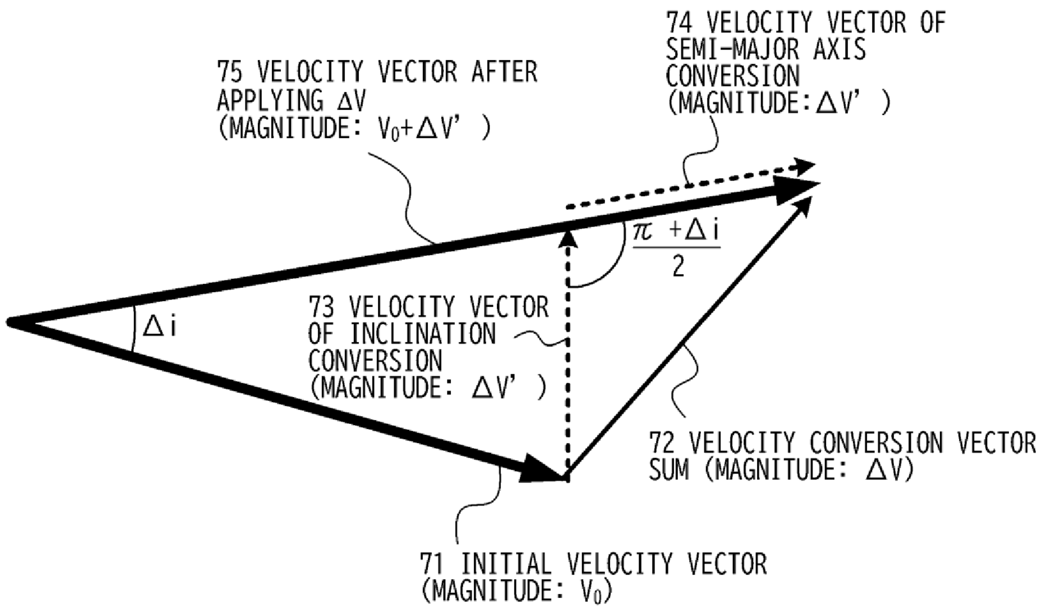
74 VELOCITY VECTOR OF SEMI-MAJOR AXIS CONVERSION (MAGNITUDE: ΔV')
75 VELOCITY VECTOR AFTER APPLYING ΔV (MAGNITUDE: $V_0$+ΔV')
π/2 +Δi
Δi
73 VELOCITY VECTOR OF INCLINATION CONVERSION (MAGNITUDE: ΔV')
72 VELOCITY CONVERSION VECTOR SUM (MAGNITUDE: ΔV)
71 INITIAL VELOCITY VECTOR (MAGNITUDE: $V_0$)

FIG. 8

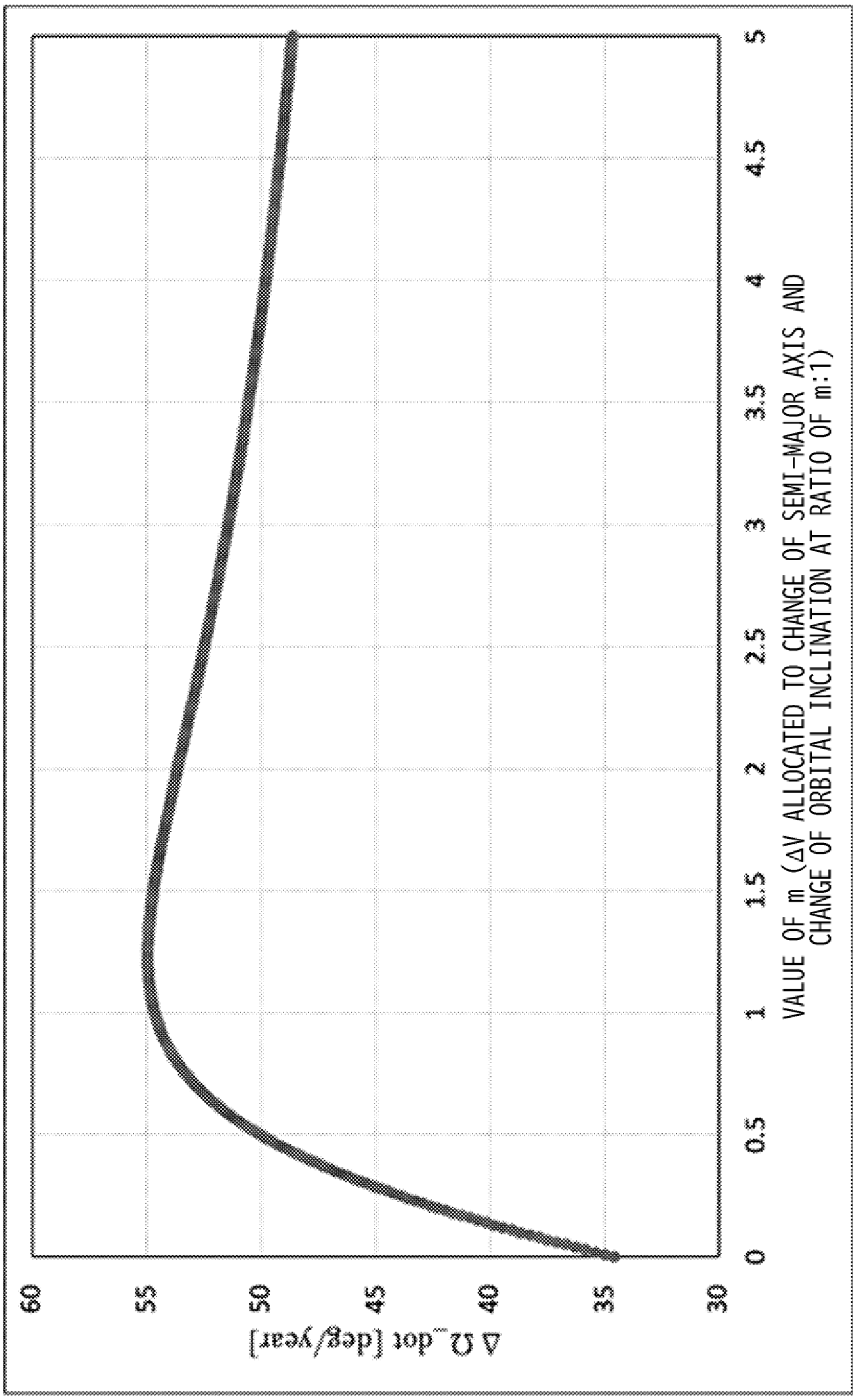
Δ Ω_dot [deg/year]
60
55
50
45
40
35
30
0
0.5
1
1.5
2
2.5
3
3.5
4
4.5
5
VALUE OF m (ΔV ALLOCATED TO CHANGE OF SEMI-MAJOR AXIS AND CHANGE OF ORBITAL INCLINATION AT RATIO OF m:1)

FIG. 9

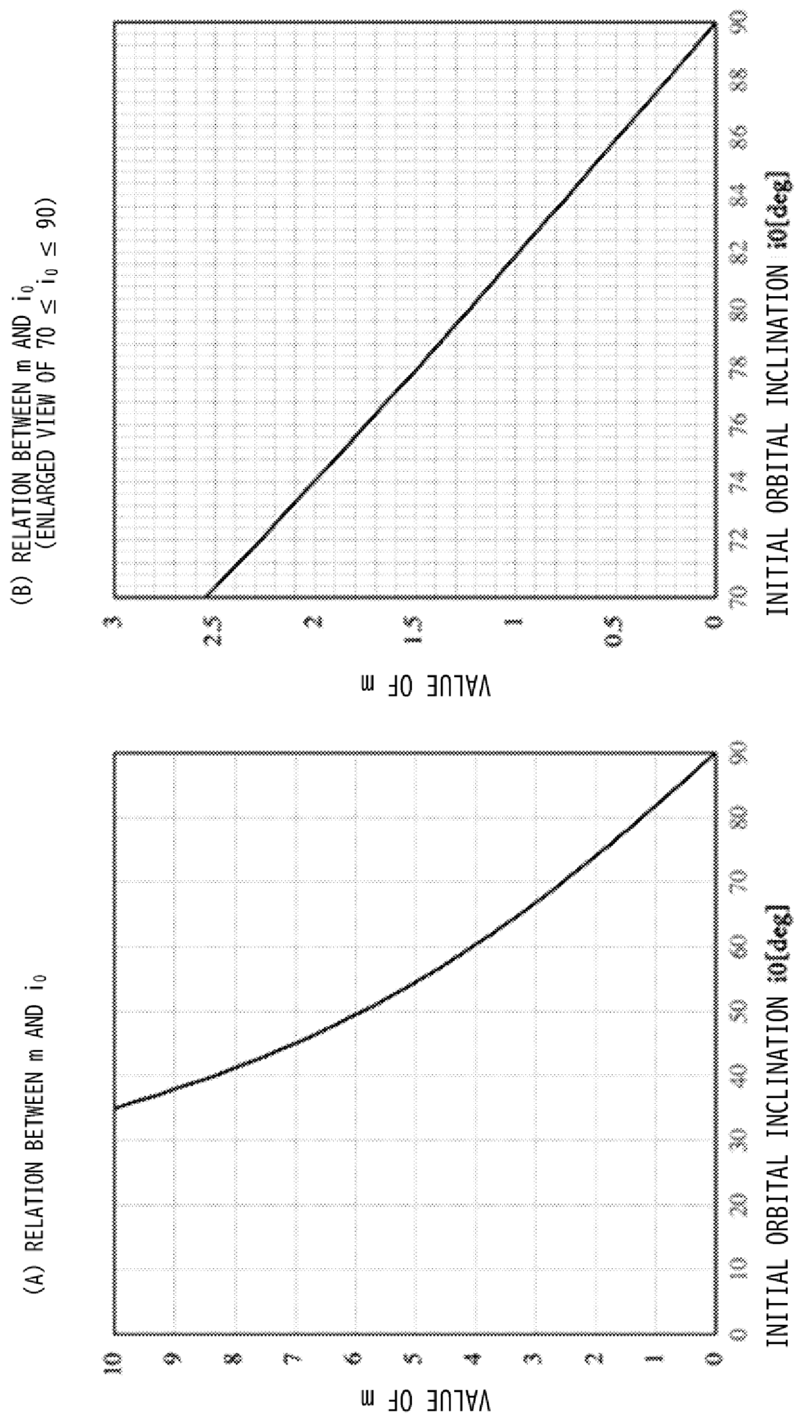
(A) RELATION BETWEEN m AND i0
VALUE OF m
INITIAL ORBITAL INCLINATION i0[deg]
(B) RELATION BETWEEN m AND i0
(ENLARGED VIEW OF 70 ≤ i0 ≤ 90)
VALUE OF m
INITIAL ORBITAL INCLINATION i0[deg]

FIG. 10

CONTOUR PLOT OF INCREASE $\Delta\dot{\Omega}_{\Delta a\&\Delta i}$ [deg/year] OF ASCENDING NODE PRECESSION RATE IN CASE OF CHANGING ORBITAL ALTITUDE AT $\Delta V$=100m/s

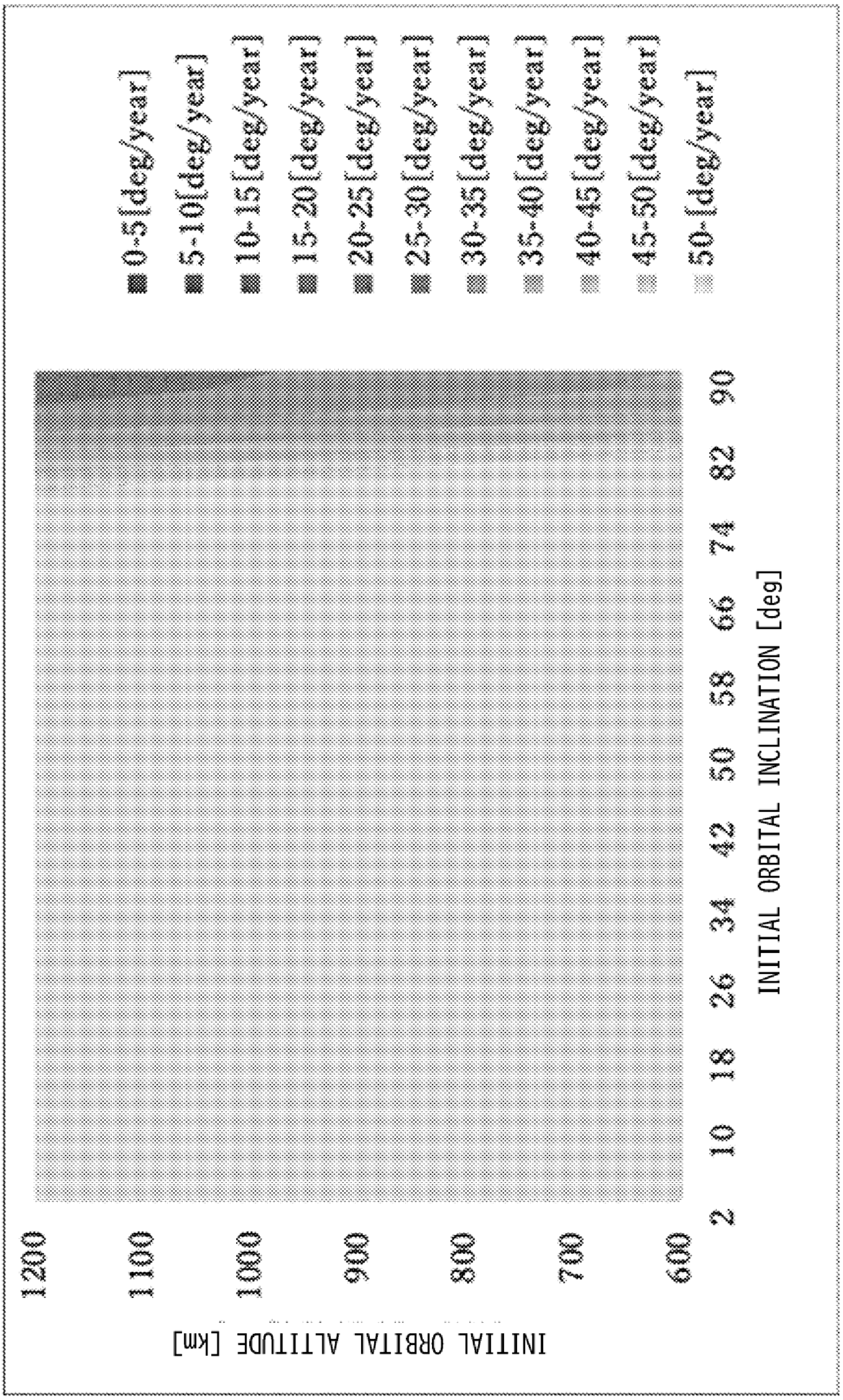

## INTERNATIONAL SEARCH REPORT

International application No. **PCT/JP2023/037581**

### A. CLASSIFICATION OF SUBJECT MATTER

***B64G 1/26***(2006.01)i
FI: B64G1/26 C

According to International Patent Classification (IPC) or to both national classification and IPC

### B. FIELDS SEARCHED

Minimum documentation searched (classification system followed by classification symbols)

B64G1/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-141108 A (THE UNIVERSITY OF TOKYO) 07 August 2014 (2014-08-07) paragraphs [0014]-[0046], fig. 1-5 | 1-11 |
| A | WO 2020/158000 A1 (MITSUBISHI ELECTRIC CORPORATION) 06 August 2020 (2020-08-06) paragraphs [0011]-[0118], fig. 1-32 | 1-11 |
| A | JP 2017-61292 A (THE BOEING COMPANY) 30 March 2017 (2017-03-30) paragraphs [0019]-[0054], fig. 1-14 | 1-11 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/037581**

| Patent document cited in search report | Publication date (day/month/year) | Patent family member(s) | Publication date (day/month/year) |
|---|---|---|---|
| JP 2014-141108 A | 07 August 2014 | WO 2014/115753 A1 | |
| WO 2020/158000 A1 | 06 August 2020 | EP 3919391 A1<br>paragraphs [0018]-[0310], fig. 1-32 | |
| JP 2017-61292 A | 30 March 2017 | US 2016/0376033 A1<br>paragraphs [0031]-[0067], fig. 1-14<br>EP 3112272 A1<br>CN 106275511 A<br>KR 10-2017-0002286 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014141108 A

### Non-patent literature cited in the description


- **E. PEROT** ; **M.-CH. DESJEAN** ; **LORENZO BITETTI** ; **TH. MARTIN.** Active Debris Removal mission design in Low Earth Orbit.. *Progress in Propulsion Physics.*, 2013
- **PETROPOULOS, A.** ; **GREBOW, D.** ; **JONES, D.** ; **LANTOINE, G.** ; **NICHOLAS, A.** ; **ROA, J.** ; **SENENT, J.** ; **STUART, J.** ; **ARORA, N.** ; **PAVLAK, T.** *Gtoc9: Results From The Jet Propulsion Laboratory (Team Jpl).*, 2018
- **VALLADO, D. A.** Fundamentals of astrodynamics and applications. Microcosm Press, 2013
- **SHIYU CHEN** ; **HEXI BAOYIN.** Analytical Estimation of the Velocity Increment in J2-Perturbed Impulsive Transfers.. *Journal of Guidance, Control, and Dynamics*, 2022, vol. 45 (2), 310-319
- **HONG-XIN SHEN** ; **LORENZO CASALINO.** Simple ΔV Approximation for Optimization of Debris-to-Debris Transfers.. *Journal of Spacecraft and Rockets*, 2021, vol. 58 (2), 575-580